# EUROPEAN PATENT SPECIFICATION

(11) **EP 2 354 241 B1**
(45) Date of publication and mention of the grant of the patent: **20.02.2013**
(21) Application number: 10016148.8
(22) Date of filing: 28.12.2010
(51) Int. Cl.: C12Q 1/02, G01N 1/31, B01L 3/00, B01L 3/02, G01N 35/00

(54) **Mechanism and method of preventing suction air from leaking during filtration of a capturing carrier solution**
Mechanismus und Verfahren zum Verhindern, dass Saugluft während der Filtration einer Erfassungsträgerlösung entweicht
Mécanisme et procédé de prévention de fuite d'air d'aspiration durant le filtrage d'une solution de support de capture

(30) Priority: 12.01.2010 JP 2010004368
(43) Date of publication of application: 10.08.2011
(73) Proprietor: Hitachi Plant Technologies, Ltd., Tokyo 170-8466 (JP)
(72) Inventor: Miyashita, Noe, Tokyo 170-8466 (JP); Yamamoto, Harumasa, Amagasaki-shi Hyogo pref. (JP); Endo, Yoshiya, Amagasaki-shi Hyogo pref. (JP); Kamitani, Matsuo, Tokyo 170-8466 (JP)
(74) Representative: Strehl Schübel-Hopf & Partner

(56) References cited:
- WO-A1-2009/157510
- WO-A2-2009/033128
- US-A1- 2009 142 785

## Description

### BACKGROUND

### (a) Field of the Invention

The present invention relates to a mechanism and method of preventing suction air from leaking during the filtration of a capturing carrier solution obtained by dissolving and diluting a capturing carrier that carries viable bacteria captured by a capturing unit in a luminescence measuring apparatus.

### (b) Description of the Related Arts

It is required that work environments are abacterial or have predetermined biological cleanliness in field sites such as various clinical medicine sites, food factories, medicinal chemical factories, and basic research sites. In the environments where biologically cleanliness is required as described above, airborne microorganisms (airborne bacteria) (viable bacteria) or fallen bacteria, and attached bacteria are counted. A method of capturing airborne bacteria by using the free fall of airborne bacteria, a method using a sampler that captures airborne bacteria by sucking a predetermined amount of air, and the like, are generally used as a method of measuring airborne bacteria.

In these methods, airborne bacteria are captured on a culture medium agar plate, are cultured for 2 to 3 days by an incubator, and the number of colonies generated after culture is obtained as the count of viable bacteria. However, in these methods, there is a problem in that it takes time to culture viable bacteria.

In contrast, as a method that allows the number of microorganisms to be measured in a short time, there is a method of converting the number of microorganisms by measuring adenosine triphosphate (ATP), which is an ingredient in a cell, by a bioluminescence method.

In a bioluminescence method, a luciferin-luciferase luminescence reaction is used; the amount of ATP is obtained from the amount of luminescence of light generated by mixing a luminescence reagent containing substrate luciferin and enzyme luciferase to a sample solution that contains ATP extracted from the cells of microorganisms and making them react to each other; and the count of viable bacteria is calculated on the basis of the amount of ATP per bacterium. A kit for measuring the count of viable bacteria by using the luminescence reaction is disclosed in Japanese Patent Application Laid-Open (JP-A) No. 11-155597.

A method of measuring the count of viable bacteria by the kit disclosed in JP-A No. 11-155597 can achieve reliable effect of shortening measurement time. However, since the amount of luminescence is very small in regard to the measurement of infinitesimal quantity of viable bacteria, the influence of background luminescence, which is caused by the influence of the mixing of ATP other than ATP to be measured or residual ATP, is increased. For this reason, there is a problem in that good measurement accuracy cannot be obtained.

In contrast, a luminescence measuring apparatus, which can suppress viable bacteria attached to a nozzle for dispensing a reagent or background luminescence caused by residual ATP and can accurately and quickly measure luminescence, is disclosed in JP-A No. 2008-249628.

However, since the recovery of viable bacteria from the capturing carrier, which captures viable bacteria, is complicated in the ATP method by such an apparatus, there is a problem in that a recovery ratio of viable bacteria is poor. Accordingly, a capturing method employing a capturing carrier disclosed in JP-A No. 2009-139115 has been proposed.

In the ATP method disclosed in JP-A No. 2009-139115, a polymer, of which the sol-gel phase transition occurs in the range of 15 to 37°C, is employed as a capturing carrier for capturing viable bacteria. Further, a through hole is formed at a lower portion of a container that is filled with the capturing carrier, and a filter is provided at the through hole. The filter is positioned by being pressed from the lower surface of the container by a filter fixing ring, and can filter the capturing carrier that has solated. For this reason, only viable bacteria substantially remain on the upper surface of the filter that has filtered the capturing carrier, so that it may be possible to improve a recovery ratio of viable bacteria.

However, a resin container, which is inexpensive and easily molded, is used as the container that is filled with the capturing carrier and filters the capturing carrier. For this reason, a large gap is formed between the container and the filter fixing ring that presses the filter, and leakage occurs from the gap during the suction filtration of the capturing carrier. There is a problem in that the occurrence of leakage causes the deterioration of suction efficiency accompanying with second air suction and the deterioration of recovery efficiency caused by the leakage of viable bacteria accompanying with the flowing of the capturing carrier into a leak.

WO 2009/167510 A1 discloses the features according to the preamble of claim 1.

### SUMMARY

The present invention addresses the above-identifed and other problems associated with conventional methods and apparatuses. The present invention provides a mechanism and method of preventing suction air from leaking from a portion different from a suction section during the filtration of a capturing carrier solution when a solution obtained by dissolving a capturing carrier is sucked using an existing resin container.

To solve the aforementioned problem, the mechanism of claim 1 and the method of claim 3 are provided. Further, in the above-mentioned mechanism for preventing suction air from leaking during the filtration of a capturing carrier solution, the suction head may include an O-ring that is disposed on the end of the suction head coming into contact with the lower surface of the filter fixing ring. According to the mechanism, the O-ring functions as a seal member between the end of the suction head and the lower surface of the filter fixing ring. Accordingly, it may be possible to prevent air from leaking between contact surfaces, and to prevent the deterioration of suction efficiency and the like.

According to the above-mentioned mechanism for preventing suction air from leaking during the filtration of a capturing carrier solution, it may be possible to suppress the leakage of suction air from a joint of members during suction filtration even when a solution obtained by dissolving a capturing carrier is sucked using an inexpensive resin container.

Further, according to the method of preventing suction air from leaking during the filtration of a capturing carrier solution, it may be possible to obtain the same advantages as those of the above-mentioned mechanism.

### BRIEF DESCRIPTION OF THE DRAWINGS

Fig. 1 is a block diagram showing the configuration of a luminescence measuring apparatus;
Fig. 2 is a view showing the detailed configuration of a capturing unit;
Fig. 3 is an exploded view of a capturing carrier cartridge;
Fig. 4A is a plan view of a main body of the capturing carrier cartridge;
Fig. 4B is a cross-sectional view of the main body of the capturing carrier cartridge;
Fig. 5 is a schematic side view of a measuring unit;
Fig. 6A is a front view illustrating a relationship between the schematic structure of a three-axis actuator and a reagent dispensing nozzle;
Fig. 6B is a top view illustrating a relationship between the schematic structure of the three-axis actuator 16 and the reagent dispensing nozzle;
Fig. 7 is a perspective view illustrating a relationship among a Z-axis mechanism part, a stationary block, and a reagent dispensing nozzle;
Fig. 8A is a cross-sectional view of a capturing carrier cartridge holder;
Fig. 8B is a cross-sectional view showing a state where the main body of the capturing carrier cartridge is assembled with the capturing carrier cartridge holder;
Fig. 9A is a top view showing the configuration of a reagent/carrier container mounting section;
Fig. 9B is a top view of a reagent cartridge;
Fig. 10 is a view showing a state during the filtration of a capturing carrier solution; and
Fig. 11 is a flow diagram illustrating the respective operational processes of a reagent dividing/dispensing mechanism.

### DETAILED DESCRIPTION OF EMBODIMENTS

A mechanism and method of preventing suction air from leaking during the filtration of a capturing carrier solution according to embodiments of the invention will be described in detail below with reference to the drawings.

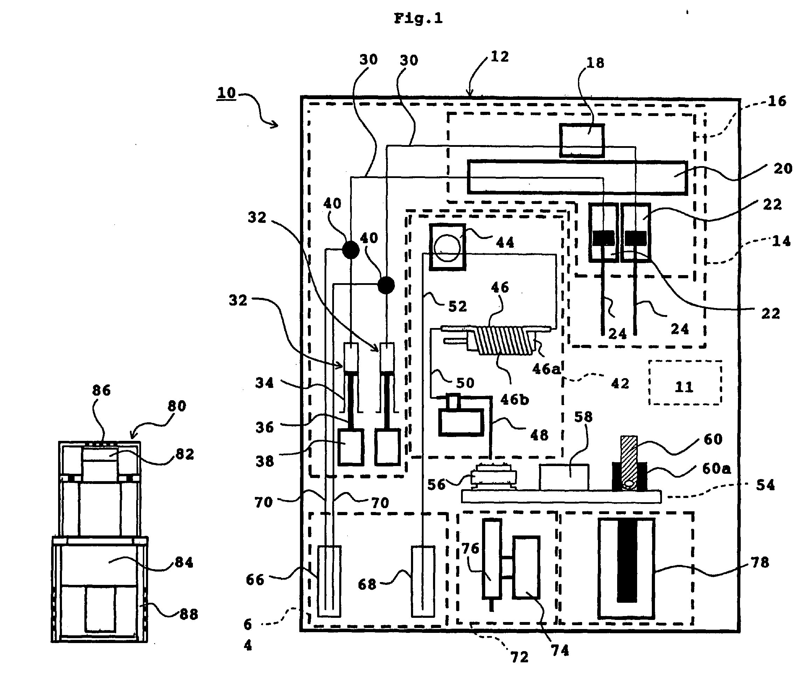

First, the entire configuration of a luminescence measuring apparatus 10 on which a mechanism for preventing suction air from leaking during the filtration of a capturing carrier solution (hereinafter, simply referred to as a leakage prevention mechanism) according to the invention will be described with reference to Fig. 1. The luminescence measuring apparatus 10 to be described in this embodiment includes a capturing unit 80 and a measuring unit 12.

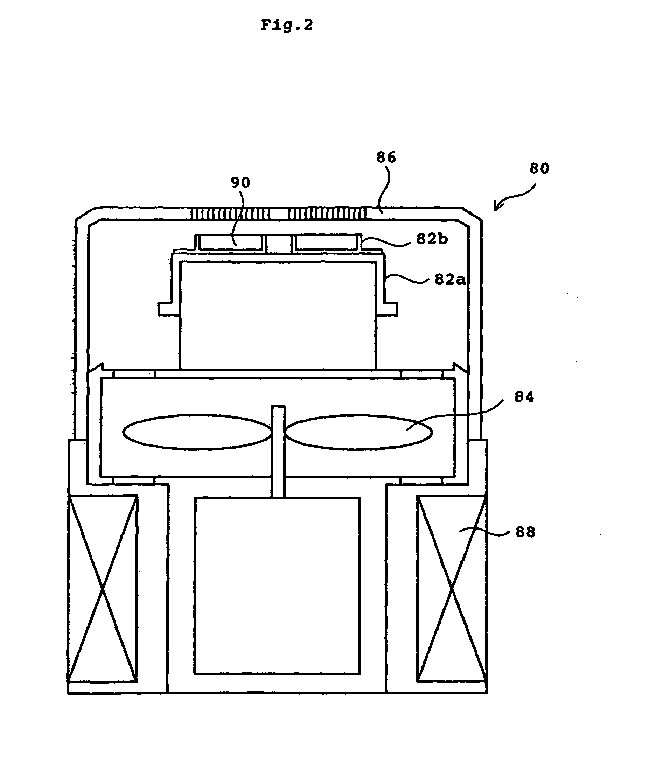

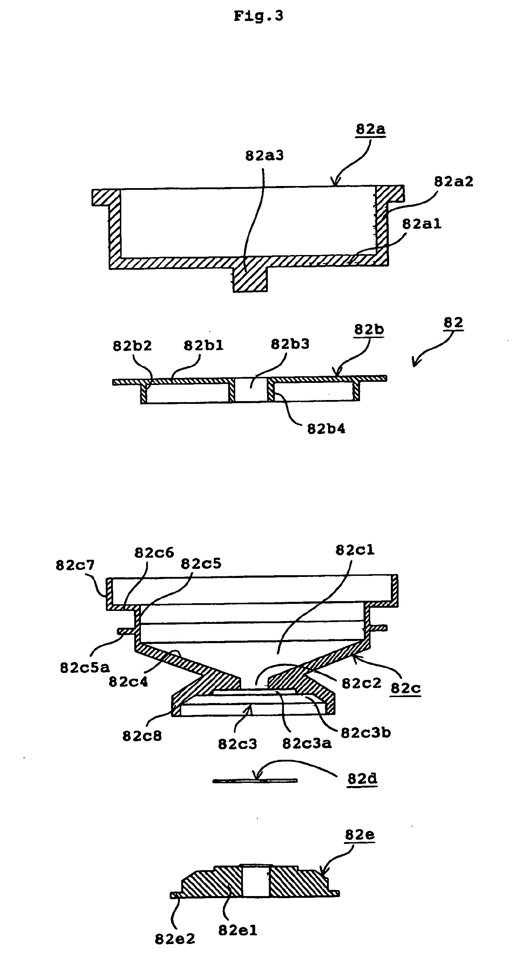

As shown in Fig. 2, the capturing unit 80 is a unit for capturing airborne viable bacteria by a capturing carrier 90 that is filled in a carrier filling tray 82b of a capturing carrier cartridge 82 (see Fig. 3). The capturing unit 80 includes an upper lid 82a and a carrier filling tray 82b of a capturing carrier cartridge 82, a blower fan 84, an impactor nozzle head 86, and an exhaust filter 88, as main components.

The capturing carrier cartridge 82 including the carrier filling tray 82b functions to capture viable bacteria floating in the air. As shown in Fig. 3, the capturing carrier cartridge 82 of this embodiment includes a cartridge main body 82c, a carrier filling tray 82b, an upper lid 82a, a filter 82d, and a filter fixing ring 82e.

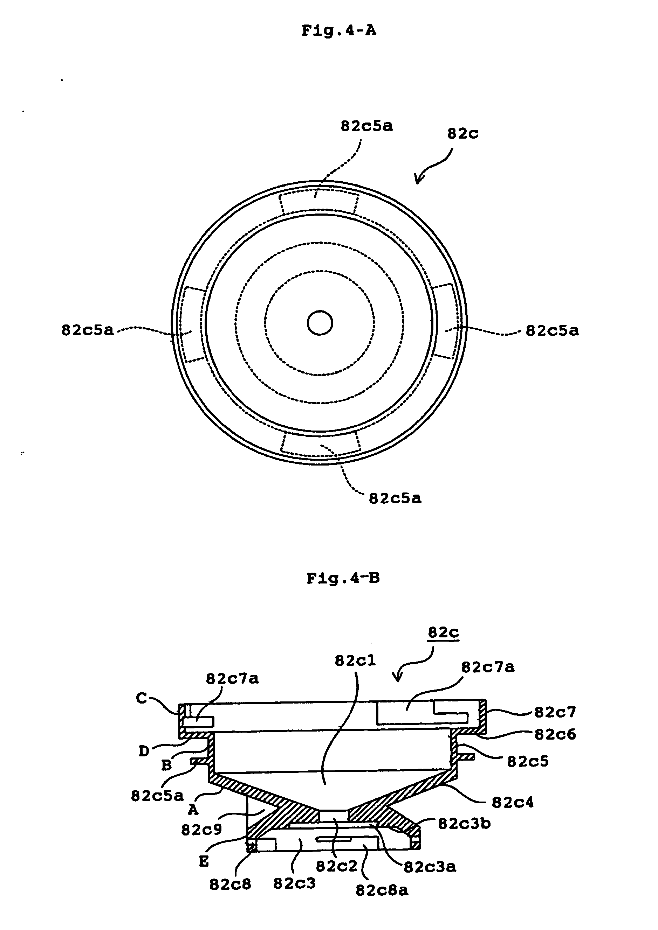

The cartridge main body 82c includes a storage portion 82c1, a filter mounting portion 82c3, and a connection hole 82c2. As described in detail below, the storage portion 82c1 is a portion for storing a solution that is obtained by diluting a melted capturing carrier with hot water. The inner surface of the storage portion 82c1 forms an inclined surface 82c4 that is inclined in the shape of a bowl toward a connection hole 82c2 formed at the center of the storage portion. Accordingly, the storage portion is formed so that the stored solution can flow into the connection hole 82c2 during filtration. A first wall portion 82c5, which is vertically formed, is formed at the upper end of the bowl-shaped storage portion 82c1. A flange-shaped flat portion 82c6 is formed at the upper end of the first wall portion 82c5, and a second wall portion 82c7 is formed at the outer edge of the flat portion. L-shaped grooves 82c7a (see Fig. 4B) are formed on the inner surface of the second wall portion 82c7, so that an upper lid 82a to be described in detail below can be connected to the second wall portion by a bayonet system. Meanwhile, Fig. 4A is a plan view of a main body of the capturing carrier cartridge, and Fig. 4B is a cross-sectional view of the main body.

The filter mounting portion 82c3 includes a recessed groove portion 82c3a that is formed around the connection hole 82c2, and a bowl-shaped portion 82c3b that is formed around the recessed groove portion 82c3a. Meanwhile, the diameter of the bowl-shaped portion 82c3b is smaller than that of the above-mentioned storage portion 82c1. A third wall portion 82c8, which extends downward, is formed at the end portion of the bowl-shaped portion 82c3b. Like the second wall portion 82c7, L-shaped grooves 82c8a are formed on the inner wall of the third wall portion 82c8 (see Fig. 4B), so that a filter fixing ring 82e to be described in detail below can be connected to the third wall portion by a bayonet system.

The appearance of the main body 82c of the capturing carrier cartridge 82, which has the above-mentioned internal structure, is defined by an outer wall A that is formed in the shape of a drum along the inner wall of the storage portion 82c1 and the filter mounting portion 82c3, a first outer wall portion B that is formed along the first wall portion 82c5, a second outer wall portion C that is the outer wall of the second wall portion 82c7, an outer wall D of the flat portion 82c6 that connects the first outer wall portion with the second outer wall portion, and a third outer wall portion E that is the outer wall of the third wall portion 82c8. Further, a reinforcing portion 82c9 is formed between the outer wall of the storage portion 82c1 and the outer wall of the filter mounting portion 82c3 so as to correspond to the range where the third outer wall portion is formed (Fig. 4B). Further, protruding portions 82c5a, which fix the main body to a cartridge holder to be described below, are formed on the outer periphery of the first wall portion 82c5. The bayonet type connection between the main body and a capturing carrier cartridge holder (hereinafter, simply referred to as a cartridge holder) 56 to be described in detail below can be achieved by the protruding portions 82c5a.

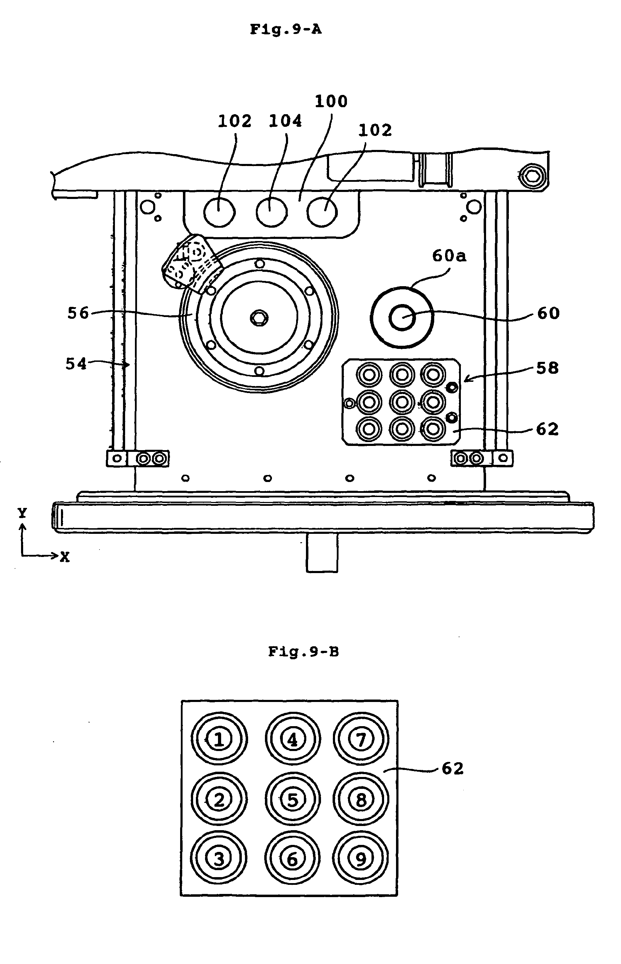

As shown in Fig. 3, the carrier filling tray 82b includes a bottom plate 82b1, an inner partition wall 82b4, and an outer partition wall 82b2. The bottom plate 82b1 may be a flat plate of which the diameter is equal to or slightly smaller than the diameter of the second wall portion 82c7 of the above-mentioned cartridge main body 82c, and includes a through hole 82b3 that is formed at the center thereof and has a small diameter. The inner partition wall 82b4 is a vertical wall that is formed along the through hole 82b3. Further, the outer partition wall 82b2 is a vertical wall which is formed in a circular shape and of which the diameter is slightly smaller than the diameter of the first wall portion 82c5 of the cartridge main body 82c. The outer partition wall 82b2 has the same height as the height of the inner partition wall 82b4. Since the outer partition wall 82b2 is disposed in the above-mentioned form, the outer edge portion of the bottom plate 82b1 is formed in the shape of a flange that protrudes to the outside of the outer partition wall 82b2. For this reason, when the carrier filling tray 82b is disposed in the cartridge main body 82c so that the inner partition wall 82b4 and the outer partition wall 82b2 face the storage portion 82c1, the outer partition wall 82b2 is fitted inside the first wall portion 82c5 and the outer edge of the bottom plate 82b1 is caught by the flat portion 82c6. As a result, the carrier filling tray is positioned (connection state is shown in Fig. 9B). Further, the through hole 82b3 and the connection hole 82c2 are disposed linearly. Accordingly, it may be possible to move the reagent dispensing nozzle 24 down onto the filter 82d, which is disposed in the filter mounting portion 82c3, through the through hole 82b3.

The upper lid 82a is a member that includes a base 82a1 and a frame portion 82a2, and allows the carrier filling tray 82b to be set on the capturing unit 80. The base 82a1 is a foundation on which the carrier filling tray 82b is disposed, and is formed in a circular shape. The base 82a1 has a diameter that is slightly larger than the diameter of the bottom plate 82b1 of the carrier filling tray 82b and slightly smaller than the diameter of the second wall portion 82c7 of the main body. The base 82a1 includes a protrusion 82a3 that is formed at the center thereof. The protrusion 82a3 is formed in a columnar shape, and the diameter of the protrusion corresponds to that of the through hole 82b3 formed at the carrier filling tray 82b. According to the above-mentioned structure, it may be possible to dispose the carrier filling tray 82b so that the protrusion 82a3 is inserted into the through hole 82b3. Accordingly, the carrier filling tray 82b does not deviate on the base 82a1. The frame portion 82a2 is a wall portion that is formed at the outer edge of the base 82a1, and is erected on the surface of the base opposite to the surface of the base 82a1 on which the carrier filling tray 82b is disposed. A plurality of protrusions (not shown) is formed on the outer periphery of the frame portion 82a2, so that a bayonet type connection mechanism is formed between the frame portion and the above-mentioned second wall portion 82c7.

A filter fixing ring 82e is a member that fixes the filter 82d disposed in the recessed groove portion 82c3a of the cartridge main body 82c. The filter fixing ring 82e includes a convex portion 82e1 and a flange portion 82e2. The convex portion 82e1 is formed so as to correspond to the shapes of the recessed groove portion 82c3a and the bowl-shaped portion 82c3b and the height of the third wall portion 82c8. The flange portion 82e2 is formed on the outer periphery of the lower end portion of the convex portion 82e1. Protrusions (not shown), which correspond to L-shaped grooves 82c8a formed at the third wall portion 82c8, are also formed on the outer periphery of the convex portion 82e1 of the filter fixing ring 82e, so that a bayonet type connection mechanism is formed between the convex portion and the filter mounting portion 82c3.

The carrier filling tray 82b of the capturing carrier cartridge 82 is provided with the capturing carrier 90 for capturing viable bacteria. The capturing carrier 90 of the carrier filling tray 82b has a characteristic where the capturing carrier has the form of a gel at normal temperature and solates by heating. Accordingly, the heated capturing carrier 90 has the form of a sol and is stored in the storage portion 82c1 of the cartridge main body 82c. Then, the heated capturing carrier is diluted with hot water for dilution that is supplied from a hot water supply section 42.

The blower fan 84 sucks air in the capturing unit 80, and functions to make airborne bacteria collide with the capturing carrier 90 of the above-mentioned carrier filling tray 82b. In order to avoid the detection error that is caused by the contamination of the blower fan 84 itself, it is preferable that the blower fan 84 be disposed on the downstream side of the above-mentioned carrier filling tray 82b (at the lower portion of the capturing unit 80 according to this embodiment so that a suction port of the blower fan is positioned on the upper side). In the capturing unit 80, the amount of air to be captured may be determined by the amount of air blown by the blower fan 84 and the operating hours of the blower fan.

The impactor nozzle head 86 is disposed at the upper portion of the capturing unit 80, and functions as both a cover of the carrier filling tray 82b and an accelerator. In order to make viable bacteria collide with the capturing carrier 90 of the carrier filling tray 82b and be carried in the capturing carrier, the speed of the flow of air flowing into the capturing unit 80 needs to be high to some extent. However, in order to obtain high speed of the flow of air, the size of the blower fan 84 needs to be increased or the rotational speed of the blower fan needs to be increased. For this reason, there is a concern that the size of the capturing unit 80 is increased.

A plurality of small-diameter holes is formed at the impactor nozzle head 86. Accordingly, air sucked by the blower fan 84 passes through the small-diameter holes and collides with the capturing carrier 90. If the amount of flowing air is constant, it may be possible to increase the speed of a fluid passing a flow passage by decreasing the area of the flow passage. For this reason, it may be possible to obtain required speed of the flow of air without increasing the size of the blower fan 84 or the rotational speed of the blower fan.

The exhaust filter 88 is disposed on the downstream side of the blower fan 84 (on the lower side in the capturing unit 80 according to this embodiment), and functions to eliminate dust contained in the exhaust air.

According to the above-mentioned structure, it may be possible to make the capturing unit 80 according to this embodiment compact and light.

The measuring unit 12 includes a reagent dispensing section 14, a hot water supply section 42, a reagent/carrier container mounting section 54, a buffer supply section 64, a filtering section 72, a PMT (Photomultiplier Tube) section 78, and an input/control section (hereinafter, simply referred to as a control section) 11. The respective components are disposed in a casing.

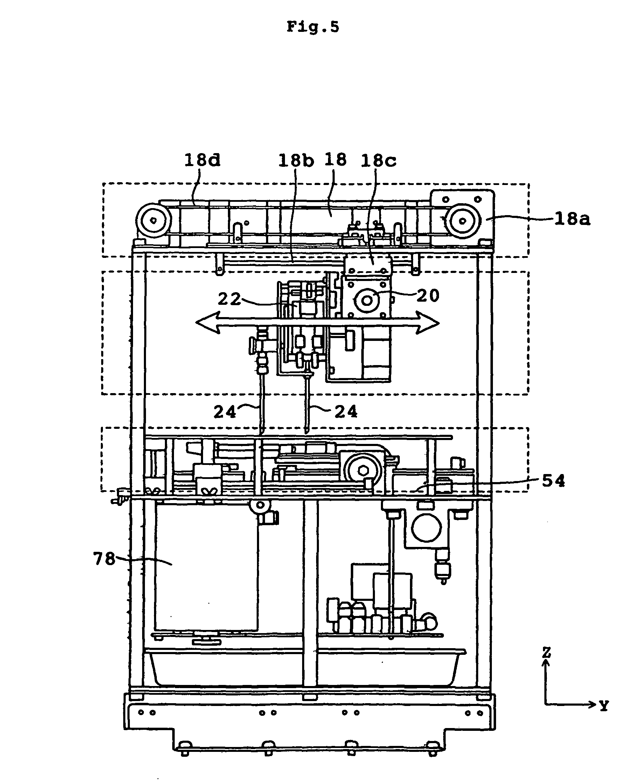

The reagent dispensing section 14 includes a three-axis actuator 16, reagent dispensing nozzles 24, and syringe pumps 32, as main components. The three-axis actuator 16 is a means for moving the reagent dispensing nozzles 24, which will be described in detail below, to desired positions. For this purpose, as shown in detail in Fig. 5, the three-axis actuator 16 includes a Y-axis mechanism part 18, an X-axis mechanism part 20, and Z-axis mechanism parts 22. The Y-axis mechanism part 18 is disposed at the upper portion of the apparatus that is less limited in terms of a space. For this reason, in the measuring unit 12 of this embodiment, a stepping motor 18a is used as a drive actuator and an operating part 18c mounted on a linear guide 18b is slid by a drive belt 18d.

In contrast, it is difficult to make the Z-axis mechanism parts 22 and the X-axis mechanism part 20, which is mounted on the operating part 18c, have a space margin. For this reason, compact actuators have been employed in the X-axis mechanism part 20 and the Z-axis mechanism parts 22. The compact actuator is a small actuator where a motor and a protruding shaft are integrated with each other by combining large-diameter thrust shafting with a hollow rotor. The operating principle of the compact actuator is to use a stepping motor as a drive system and to use a ball screw as the protruding shaft. Accordingly, the compact actuator is compact and enables highly accurate positioning.

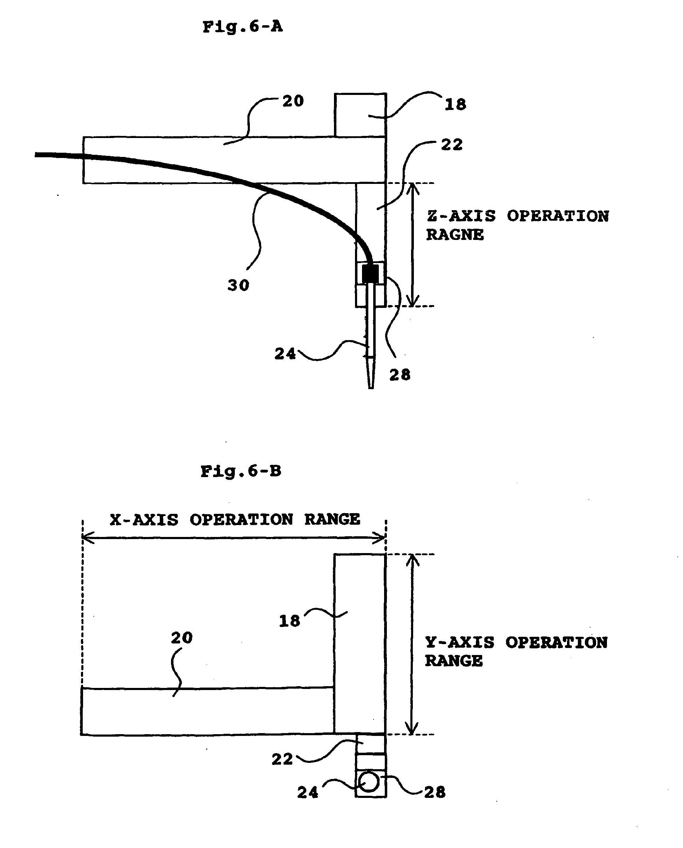

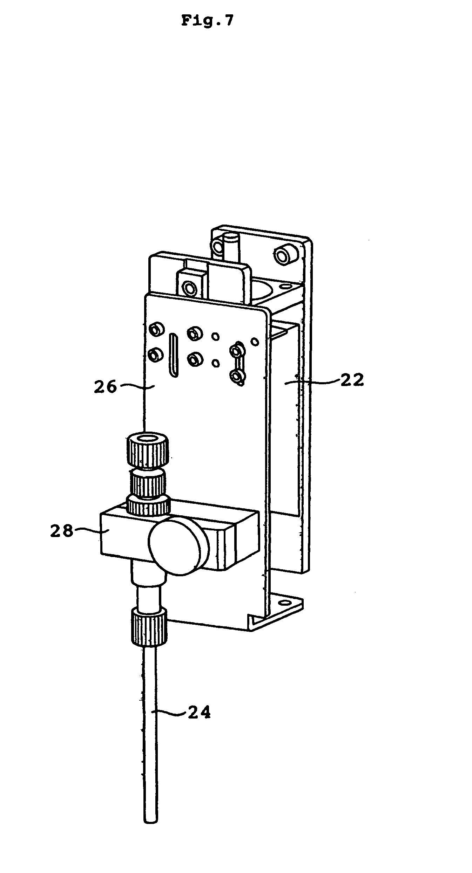

Each of the reagent dispensing nozzles 24 is a nozzle that functions to divide and dispense the desired amount of various reagents used to measure luminescence. As shown in Figs. 6 and 7, the reagent dispensing nozzle 24 is supported by a stationary block 28 that is provided on a slide guide 26 mounted on a compact actuator, that is, the Z-axis mechanism part 22. It may be possible to stabilize movement in a vertical direction through the employment of the above-mentioned support form. Meanwhile, Fig. 6A is a front view illustrating a relationship between the schematic structure of the three-axis actuator 16 and the reagent dispensing nozzle 24, and Fig. 6B is a top view of Fig. 6A. Further, Fig. 7 is a perspective view illustrating a relationship between the Z-axis mechanism part 22 and the reagent dispensing nozzle 24.

Dispensing tubes 30, which are connected to the syringe pumps 32 to be described in detail below, are connected to the rear ends of the reagent dispensing nozzles 24, respectively. Negative pressure is applied to the reagent dispensing nozzle 24 through the dispensing tube 30, so that the reagent dispensing nozzle 24 divides a reagent. Positive pressure is applied to the reagent dispensing nozzle, so that the reagent dispensing nozzle dispenses the divided reagent. Meanwhile, the reagent dispensing nozzle 24 may be formed of a resin or metal pipe other than a glass pipe.

The syringe pump 32 functions to control a working fluid (pure water in this embodiment) that allows the above-mentioned reagent dispensing nozzle 24 to divide and dispense a reagent. The syringe pump 32 includes a syringe 34, a plunger 36, and an actuator 38, as main components. The syringe 34 is a tank that stores pure water, that is, a working fluid. The plunger 36 is a rod that functions to introduce pure water into the syringe 34 and discharge the pure water from the syringe by applying negative pressure or positive pressure to the syringe 34. The actuator 38 is a drive means for pushing or pulling the plunger 36. If a stepping motor, a ball screw, and the like are used as the actuator 38, it may be possible to perform highly accurate positioning.

One end of the dispensing tube 30 is connected to the end of the syringe 34 of the syringe pump 32 having the above-mentioned structure, and the other end of the dispensing tube 30 is connected to the above-mentioned reagent dispensing nozzle 24. When the plunger 36 is pulled if the dispensing tube 30 is connected as described above, pure water is collected in the syringe 34 and negative pressure is applied to the reagent dispensing nozzle 24, so that a reagent is injected into the reagent dispensing nozzle 24 (a reagent is divided). In contrast, when the plunger 36 is pushed, pure water discharged from the syringe 34 is sent to the reagent dispensing nozzle 24. Accordingly, pressure in the reagent dispensing nozzle 24 rises, so that the reagent collected in the reagent dispensing nozzle 24 is discharged (dispensed).

A buffer supply pipe 70, which is connected to the buffer supply section 64 to be described in detail below, is connected to the dispensing tube 30 through a distribution valve 40 such as a three-way valve. According to the above-mentioned structure, pure water, which is a working fluid, stored in the dispensing tube 30 may be regularly replaced. Accordingly, it may be possible to suppress the error of measured data that is caused by the contamination of a working fluid.

The hot water supply section 42 functions to supply hot water that is used to dilute the capturing carrier. The hot water supply section 42 includes a peristaltic pump 44, a heater 46, and a hot water supply nozzle 48, as main components. The peristaltic pump 44 includes a resin tube, a roller, and an actuator, as main components (not shown). The resin tube is a tube that is employed to send liquid, and a conveyed fluid (pure water in this embodiment) flows in the resin tube. It is preferable that the tube has flexibility and durability since being crushed by rollers in terms of a mechanism, and the tube may be, for example, a silicon tube or the like. The rollers are formed of a rotating roller and a plurality of revolving rollers that revolves around the rotating roller. The rollers function to extrude a conveyed fluid, which is stored in the crushed region, in the revolving direction of the rollers by repeatedly rotating and revolving while the resin tube is crushed by the revolving rollers. A force for returning to an original shape acts on the resin tube that is crushed by the rollers. Further, the conveyed fluid is an incompressible fluid. Accordingly, if the plurality of rollers continuously revolves, the conveyed fluid is continuously extruded. Meanwhile, the actuator may rotate the plurality of rollers.

According to the peristaltic pump 44 having the above-mentioned structure, the conveyed fluid (pure water in this embodiment) comes into contact with only the inner portion of the tube where the conveyed fluid flows. Accordingly, the pump itself is not contaminated. For this reason, it is easy to maintain an antiseptic condition and to perform cleaning.

The heater 46 functions to heat pure water that is a conveyed fluid. A specific structure is not required as the structure of the heater 46, but it is preferable that a cartridge heater or a tube heater be employed if a small size is important. For example, if the cartridge heater is employed, a pipe made of metal (hereinafter, simply referred to as a metal pipe 46b) may be wound on the outer periphery of a heater main body 46a as shown in Fig. 1 and pure water, which is a conveyed fluid, may flow in the wound metal pipe 46b. According to the above-mentioned structure, the pure water flowing in the metal pipe 46b is heated by heat transfer. Further, if the tube heater is employed, a rubber heater is wound around a resin pipe (tube) or the like and pure water, which is a conveyed fluid, flowing in the resin tube is heated. If a silicon resin or the like is employed as the resin tube in this structure, a heat transfer coefficient is increased. Furthermore, since the resin tube and the rubber heater have flexibility, the degree of freedom in pipe arrangement is high and it may be possible to secure a long heating region. For this reason, it may be possible to avoid the decrease in temperature after heating, that is, to stabilize temperature. As for the position of the heater 46, it is preferable that a length where a fluid is sent after heating be shortened to prevent the decrease in temperature after heating. Accordingly, in the measuring unit 12 of this embodiment, the heater is disposed between the above-mentioned peristaltic pump 44 and a hot water supply nozzle 48 that will be described in detail below.

The hot water supply nozzle 48 is a discharge nozzle that is supplied with a fluid by the peristaltic pump 44 and supplies hot water (pure water), which is heated by the heater 46, to the main body 82c of the capturing carrier cartridge 82 disposed at the reagent/carrier container mounting section 54 to be described in detail below. The hot water supply nozzle may be formed of a metal (SUS) pipe, a glass pipe, a resin pipe, or the like. A hot water supply pipe 50, which is connected to the peristaltic pump 44 through the heater 46, is connected to the end portion of the hot water supply nozzle 48 opposite to a discharge port of the hot water supply nozzle 48. Meanwhile, a suction pipe 52 of the peristaltic pump 44 is connected to the buffer supply section 64 to be described in detail below.

According to the hot water supply section 42 having the above-mentioned structure, it may be possible to continuously discharge hot water from the hot water supply nozzle 48 by driving the peristaltic pump 44.

The reagent/carrier container mounting section 54 is a stage where a reagent used to measure luminescence or a capturing carrier is disposed. A cartridge holder 56, a reagent rack 58, a luminescence measuring tube holder 60a, and the like are disposed on the reagent/carrier container mounting section 54.

The cartridge holder 56 is a holder that sets the main body 82c, the carrier filling tray 82b, the filter 82d, and the filter fixing ring 82e of the capturing carrier cartridge 82. Since a heater is built in the cartridge holder 56, the holder can heat the set capturing carrier cartridge 82.

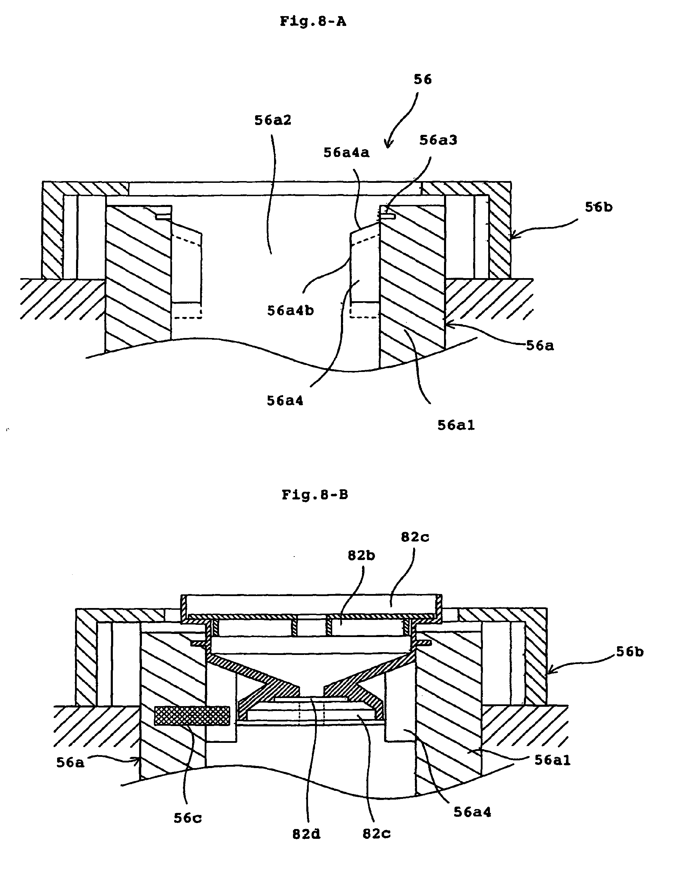

As shown in Figs. 8A and 8B, the cartridge holder according to this embodiment includes a holder main body 56a and a heat insulation case 56b. Fig. 8A is a cross-sectional view of the cartridge holder, and Fig. 8B is a cross-sectional view showing a state where the main body of the capturing carrier cartridge is assembled with the cartridge holder.

The holder main body 56a includes an opening 56a2 where a suction head 76 (see Fig. 1) of the filtering section 72 to be described in detail below is disposed, and a holder portion that is formed at the outer periphery of the opening 56a2. The holder portion includes a movable block 56a4 and a stationary block 56a1. The movable block 56a4 can be moved along the inner surface of the stationary block 56a1 in a vertical direction. The movable block has an inclined surface 56a4a and contact surfaces that are formed of vertical surfaces 56a4b. The inclined surface 56a4a is formed along the outer wall of the storage portion 82c1 of the capturing carrier cartridge 82. The vertical surfaces 56a4b are erected at the lower and upper ends of the inclined surface 56a4a.

The movable block 56a4 is a holding mechanism that is disposed inside the stationary block 56a1. Grooves 56a3 into which the protruding portions 82c5a of the main body 82c of the above-mentioned capturing carrier cartridge 82 are fitted are formed on the inner wall surface of the stationary block 56a1. The movable block 56a4b supports the cartridge main body 82c set on the holder main body 56a and pushes the cartridge main body up, so that the movable block can stabilize the holding of the cartridge main body 82c that is performed by the holder main body 56a.

The holder main body 56a is made of a material having high heat transfer efficiency such as aluminum, and a cartridge heater (heater) 56c inserted (embedded) in the holder main body heats the capturing carrier cartridge 82 through the holder main body 56a (the contact surface between the capturing carrier cartridge 82 and the holder main body). Meanwhile, as long as the heater 56 can heat the capturing carrier cartridge 82 set on the holder main body 56a up to a predetermined temperature, any means may be used as the heater. For example, a rubber heater or the like, which covers the holder main body 56a in the form of a ring or a cap, may be used as the heater. The heat insulation case 56b is a cover that covers the outer peripheral surface and the upper surface of the holder main body 56a so that the holder main body 56a, which is a heating element, is not directly exposed to the outside. The material of the heat insulation case 56b is not particularly limited. However, it is preferable that the heat insulation case be made of a material having low heat conductivity, for example, a heat resistant resin or the like. According to the above-mentioned structure, the (cartridge) heater 56c can heat the main body 82c of the capturing carrier cartridge 82 through the holder main body 56a by heat transfer and heat conduction.

A reagent cartridge, which is filled with a reagent used to measure luminescence, is disposed in the reagent rack 58. As shown in Fig. 9A and 9B, the reagent cartridge is a package where different kinds of reagents, pure water, or the like are filled in recessed portions partitioned into a plurality of portions (nine recessed portions in an example shown in Fig. 9B). The upper openings of the recessed portions are sealed by an aluminum sheet (film) or the like. According to the above-mentioned structure, until the aluminum sheet is peeled off so that the recessed portions are opened, the reagents are not exposed to the outside and the stocked reagents are not contaminated by viable bacteria or the like. Meanwhile, Fig. 9A is a top view of the reagent/carrier container mounting section 54, and Fig. 9B is a top view of a reagent cartridge 62.

A luminescence measuring tube 60 is disposed on the luminescence measuring tube holder 60a. The luminescence measuring tube 60 is a microtube that is used to perform a luminescence reaction of ATP extracted from viable bacteria captured by the filter 82d of the capturing carrier cartridge 82.

The buffer supply section 64 includes a tank of water for controlling the reagent dispensing nozzle (hereinafter, simply referred to as a control water tank 66) and a hot water supply tank 68. The cleanliness of the water (pure water) of the control water tank 66, which is filled in the dispensing tube 30 for connecting the syringe pump 32 with the reagent dispensing nozzle 24, needs to be maintained higher than that of the water (pure water) of the hot water supply tank 68 so that a process for eliminating isolated ATP is not included in a process after the reagent dispensing nozzle 24 is used. For this purpose, the capacity of the control water tank 66 is set to be smaller than that of the hot water supply tank 68 so that the stored water is appropriately refilled. Meanwhile, water of the hot water supply tank 68 is poured into the storage portion 82c1 of the main body 82c of the capturing carrier cartridge 82, which is set on the cartridge holder 56. Accordingly, the amount of water of the hot water supply tank 68 needs to be larger than that of the control water tank 66.

The control water tank 66, which is set as described above, is connected to the distribution valve 40 of the dispensing tube 30 by the buffer supply pipe 70, so that pure water can be supplied to the dispensing tube 30 by the switching of the distribution valve 40. Further, the hot water supply tank 68 is connected to the suction side of the above-mentioned peristaltic pump 44, so that water of the hot water supply tank is sucked by the driving of the peristaltic pump 44.

The filtering section 72 functions to eliminate the capturing carrier 90 (a capturing carrier solution) that is stored in the storage portion 82c1 and diluted with hot water discharged from the hot water supply nozzle 48. The filtering section 72 includes a suction pump 74 and a suction head 76, as main components. The suction pump 74 is a pump that generates negative pressure in the suction head 76 to be described in detail below. Further, the suction head 76 is an open end type cylindrical body. The end of the suction head 76 comes into contact with the flat portion of the lower surface of the filter fixing ring 82e of the capturing carrier cartridge 82. Accordingly, an O-ring 76a is disposed at the end of the suction head 76 so as to be capable of preventing air from leaking during the suction of air.

Moreover, the suction head 76 is provided with an actuator (not shown). The actuator functions to press the end of the suction head 76 against the lower end portion of the main body 82c of the capturing carrier cartridge 82 assembled with the cartridge holder 56, that is, the lower surface of the filter fixing ring 82e with a predetermined pressure on the basis of the control signal sent from the control section 11. According to the above-mentioned structure, a state where predetermined pressure is applied to the lower surface of the cartridge main body 82c fixed to the cartridge holder 56 is maintained during the suction of air.

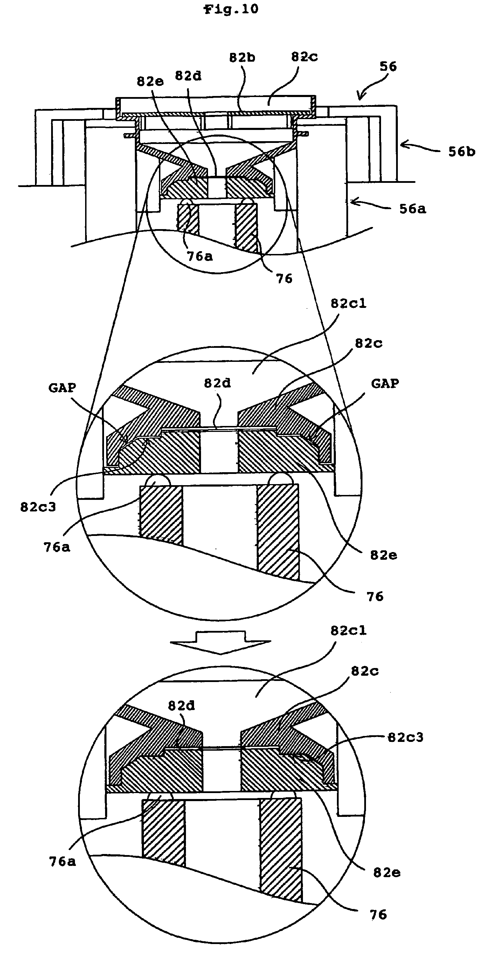

As shown (on the upper side) in a partially enlarged view of Fig. 10, a small gap is formed between the filter fixing ring 82e and the main body 82c of the capturing carrier cartridge 82 that employs a bayonet mechanism as a connection mechanism, due to a dimensional fitting tolerance or clearance. For this reason, if suction is performed while the suction head 76 simply comes into contact with the lower surface of the filter fixing ring 82e, suction air leaks from the small gap between the cartridge main body 82c and the filter fixing ring 82e. If air leaks during the suction of air, there is a concern that problems, such as the decrease in suction pressure caused by the second suction of air, the deterioration of filtration efficiency, and the flowing of a solution into a leak (gap) occur.

In contrast, if the suction head 76 is pressed as described above, the suction head 76 presses the filter fixing ring 82e itself against the cartridge main body 82c. As a result, it may be possible to suppress the leakage of air during the suction of air (see the lower side of a partially enlarged view shown in Fig. 10).

In the filtering section 72 including the above-mentioned main components, it may be possible to suck and eliminate the capturing carrier, which is diluted with hot water, through the filter 82d by connecting the end of the suction head to the lower portion of the cartridge holder 56 and operating the suction pump 74.

The PMT section 78 functions to measure the amount of luminescence of ATP in the luminescence measuring tube 60. In the measuring unit 12 of this embodiment, the PMT section 78 is a head-on type and has been disposed below the above-mentioned luminescence measuring tube 60. According to the above-mentioned structure, light generated in the luminescence measuring tube 60 enter from the upper portion of the PMT section 78 and the amount of luminescence is measured.

Meanwhile, the control section 11 is an element that facilitates the automation of the measurement of luminescence by controlling the respective components on the basis of the input values input to the luminescence measuring apparatus.

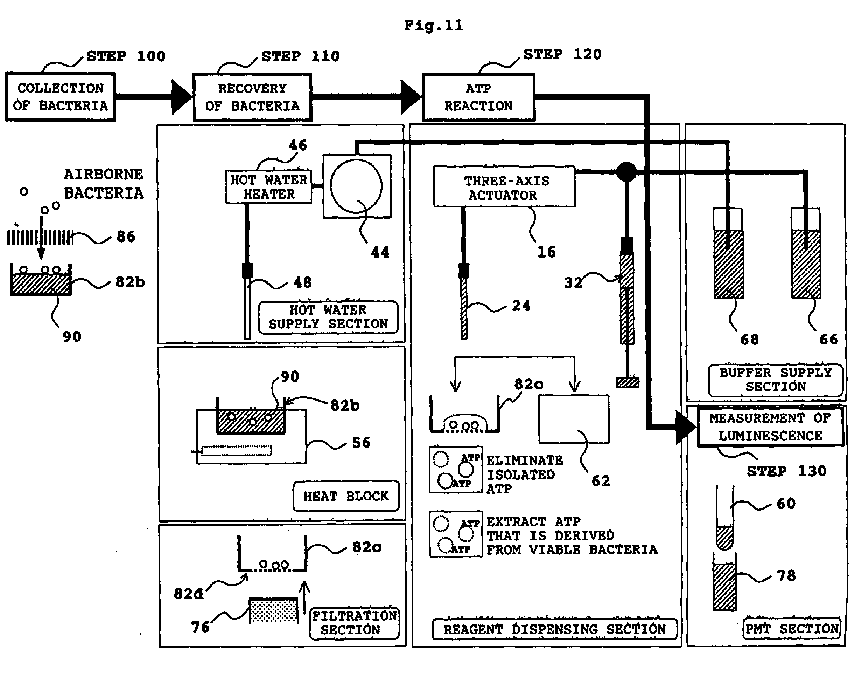

In the luminescence measuring apparatus 10 that includes the measuring unit 12 and the capturing unit 80 including the above-mentioned main components, first, airborne viable bacteria are captured by the capturing unit 80 (Step 100: see Fig. 11).

Next, the carrier filling tray 82b of the capturing carrier cartridge 82, which has captured viable bacteria, is removed from the capturing unit 80, and is assembled with the cartridge holder 56 of the measuring unit 12 while being set in the cartridge main body 82c. The cartridge main body 82c set on the cartridge holder 56 is heated by the heater 56c. The capturing carrier solates by heating. The capturing carrier 90, which has solated, is stored in the storage portion 82c1 of the cartridge main body 82c and is diluted with hot water that is supplied from the hot water supply nozzle 48. Further, the diluted capturing carrier 90 (capturing carrier solution) is sucked and eliminated through the filter 82d by the filtering section 72, and viable bacteria captured by the capturing carrier 90 and isolated ATP remain in the filter 82d. Here, a control signal is output to an actuator (not shown) of the suction head 76 from the control section 11 in the filtering section 72. The actuator, which has received the control signal, removes a gap formed between the cartridge main body 82c and the filter fixing ring 82e by pressing the suction head 76 against the filter fixing ring 82e, which is disposed below the cartridge main body 82c, with a predetermined pressure. While the actuator (not shown) is maintained in this state, an operation signal is output from the control section 11 to the suction pump 74 of the filtering section 72 and an operation for sucking the capturing carrier solution is performed (Step 110: see Fig. 11).

After the capturing carrier 90 is filtered, the reagent dispensing section 14 is operated, so that isolated ATP is eliminated, ATP is extracted from viable bacteria, and a sample is divided. First, a reagent is divided from the reagent cartridge 62 by the reagent dispensing nozzle 24 and is dispensed to the capturing carrier cartridge 82, so that the isolated ATP is eliminated. By this operation, it may be possible to prevent the generation of a measured error of the amount of luminescence that is caused by a luminescence reaction caused by the isolated ATP. After that, the reagent extracted from ATP is dispensed to the filter 82d of the capturing carrier cartridge 82 where the isolated ATP has been eliminated, ATP derived from viable bacteria is extracted (Step 120: see Fig. 11).

After ATP derived from viable bacteria is extracted, a luminescence reagent is dispensed to the luminescence measuring tube 60. Subsequently, ATP derived from viable bacteria is divided from the filter 82d and is dispensed to the luminescence measuring tube 60 to which the luminescence reagent has been dispensed, and the intensity of luminescence is measured by the PMT section 78 (Step 130: see Fig. 11).

In the luminescence measuring apparatus 10 including the above-mentioned leakage prevention mechanism, there is no concern that air leaks between the cartridge main body 82c and the filter fixing ring 82e when a capturing carrier solution is filtered through the filter 82d from the storage portion 82c1 of the main body 82c of the capturing carrier cartridge 82. For this reason, there is no concern that filtration efficiency deteriorates by the second suction of air or a capturing carrier solution flows into a leak during the filtration of air.

## Claims

1. A mechanism for preventing suction air from leaking during filtration of a capturing carrier solution (90), the mechanism comprising:
a capturing carrier cartridge (82) including a cartridge main body (82c) and a filter fixing ring (82e), the cartridge main body (82c) including a storage portion (82c1) for storing a capturing carrier solution (90) and a filter mounting portion (82c3) where a filter for filtering the capturing carrier solution (90) is disposed, and the filter fixing ring (82e) covering the filter mounting portion (82c3), positioning the filter (82d), and sucking and filtering the capturing carrier solution (90) through the filter (82d);
a cartridge holder (56) provided with an opening in which the filter mounting portion (82c3) of the capturing carrier cartridge (56) is disposed, the cartridge holder (56) including a holding portion for holding the storage portion (82c1); and
a suction head (76) for sucking the capturing carrier solution (90) through the filter fixing ring (82e); whereby
a small gap (GAP) is formed between the filter fixing ring (82e) and the cartridge main body (82c) due to a dimensional fitting tolerance or clearance, and
**characterised in that** the suction head (76) is provided with an actuator adapted to remove the gap (GAP) by pressing the suction head (76) against the filter fixing ring (82e) with a predetermined pressure while sucking the capturing carrier solution (90).

2. The mechanism of claim 1, wherein the suction head (76) includes an O-ring (76a) that is disposed on the end surface of the suction head (76) being in contact with the lower surface of the filter fixing ring (82e).

3. A method of preventing suction air from leaking during filtration of a capturing carrier solution (90), the method using a capturing carrier cartridge (82) that includes a cartridge main body (82c) and a filter fixing ring (82e), a small gap (GAP) being formed between the filter fixing ring (82e) and the cartridge main body (82e) due to a dimensional fitting tolerance or clearance, the cartridge main body including a storage portion (82c1) for storing a capturing carrier solution (90) and a filter mounting portion (82c3) where a filter (82d) for filtering the capturing carrier solution (90) is disposed, and the filter fixing ring (82e) covering the filter mounting portion (82c3), positioning the filter (82d), and sucking and filtering the capturing carrier solution (90) from a lower surface thereof, the method comprising:
fixing the storage portion (82c3) of the capturing carrier cartridge (82); and providing a suction head (76) for sucking the capturing carrier solution (90) through the filter fixing ring (82e) with an actuator, and sucking the capturing carrier solution (90) through the filter (82d) while said actuator presses the filter fixing ring (82d) against the filter mounting portion said (82c3) in order to remove the gap (GAP).

## Patentansprüche

1. Mechanismus zum Verhindern, dass Saugluft während einer Filtration einer Erfassungsträgerlösung (90) entweicht, wobei der Mechanismus umfasst:
eine Erfassungsträgerkartusche (82), die einen Kartuschen-Hauptkörper (82c) und einen Filterbefestigungsring (82e) umfasst, wobei der Kartuschen-Hauptkörper (82c) einen Speicherabschnitt (82c1) zum Speichern einer Erfassungsträgerlösung (90) und einen Filteranbringungsabschnitt (82c3), an dem ein Filter zum Filtern der Erfassungsträgerlösung (90) angeordnet ist, umfasst, und wobei der Filterbefestigungsring (82e) den Filteranbringungsabschnitt (82c3) abdeckt, den Filter (82d) positioniert und die Erfassungsträgerlösung (90) durch den Filter (82d) saugt und filtert;
einen Kartuschenhalter (56), der mit einer Öffnung versehen ist, in der der Filteranbringungsabschnitt (82c3) der Erfassungsträgerkartusche (56) angeordnet ist, wobei der Kartuschenhalter (56) einen Halteabschnitt zum Halten des Speicherabschnitts (82c1) umfasst; und
einen Saugkopf (76) zum Saugen der Erfassungsträgerlösung (90) durch den Filterbefestigungsring (82e); wodurch ein kleiner Spalt (GAP) aufgrund Maßtoleranz oder Spiel zwischen dem Filterbefestigungsring (82e) und dem Kartuschen-Hauptkörper (82c) entsteht,
**dadurch gekennzeichnet, dass** der Saugkopf (76) mit einem Aktuator versehen ist, der dazu ausgebildet ist, während des Saugens der Erfassungsträgerlösung (90) durch Andrücken des Saugkopfs (76) gegen den Filterbefestigungsring (82e) mit einem vorgegebenen Druck den Spalt (GAP) zu beseitigen.

2. Mechanismus nach Anspruch 1, wobei der Saugkopf (76) einen O-Ring (76a) umfasst, der an der Endoberfläche des mit der unteren Oberfläche des Filterbefestigungsrings (82e) in Kontakt stehenden Saugkopfs (76) angeordnet ist.

3. Verfahren zum Verhindern, dass Saugluft während einer Filtration einer Erfassungsträgerlösung (90) entweicht, wobei das Verfahren eine Erfassungsträgerkartusche (82) verwendet, die einen Kartuschen-Hauptkörper (82c) und einen Filterbefestigungsring (82e) umfasst, wobei ein kleiner Spalt (GAP) zwischen dem Filterbefestigungsring (82e) und dem Kartuschen-Hauptkörper (82e) aufgrund Maßtoleranz oder Spiel entstanden ist, wobei der Kartuschen-Hauptkörper einen Speicherabschnitt (82c1) zum Speichern einer Erfassungsträgerlösung (90) und einen Filteranbringungsabschnitt (82c3), an dem ein Filter (82d) zum Filtern der Erfassungsträgerlösung (90) angeordnet ist, umfasst, und der Filterbefestigungsring (82e) den Filteranbringungsabschnitt (82c3) abdeckt, den Filter (82d) positioniert, und die Erfassungsträgerlösung (90) von einer davon niederen Oberfläche saugt und filtert, wobei das Verfahren umfasst:
Befestigen des Speicherabschnitts (82c3) der Erfassungsträgerkartusche (82); und
Vorsehen eines Saugkopfs (76) zum Saugen der Erfassungsträgerlösung (90) durch den Filterbefestigungsring (82e) mit einem Aktuator, und Saugen der Erfassungsträgerlösung (90) durch den Filter (82d), während der Aktuator den Filterbefestigungsring (82d) gegen den Filteranbringungsabschnitt (82c3) drückt, um den Spalt (GAP) zu beseitigen.

## Revendications

1. Mécanisme pour empêcher la fuite de l'air d'aspiration lors de la filtration d'une solution de support de capture (90), le mécanisme comportant :
une cartouche de support de capture (82) incluant un corps principal de cartouche (82c) et une bague de fixation de filtre (82e), le corps principal de cartouche (82c) incluant une partie de stockage (82c1) pour stocker une solution de support de capture (90) et une partie de montage du filtre (82c3) dans laquelle un filtre pour filtrer la solution de support de capture est disposé, et la bague de fixation de filtre (82e) recouvrant la partie de montage du filtre (82c3), positionnant le filtre (82d), et aspirant et filtrant la solution de support de capture (90) à travers le filtre (82d),
un support de cartouche (56) muni d'une ouverture dans laquelle la partie de montage du filtre (82c3) de la cartouche de support de capture (56) est disposée, le support de cartouche (56) comprenant une partie de maintien pour maintenir la partie de stockage (82c1), et
une tête d'aspiration (76) pour aspirer la solution de support de capture (80) à travers la bague de fixation du filtre (82e), dans lequel
un petit espace (GAP) est formé entre la bague de fixation du filtre (82e) et le corps principal de cartouche (82e), du faite d'une tolérance d'ajustement dimensionnel ou d'un jeu, et
**caractérisé en ce que** la tête d'aspiration (76) est munie d'un actionneur adapté pour éliminer l'espace (GAP) en appliquant une pression prédéterminée sur la tête d'aspiration (76) contre la bague de fixation du filtre (82e) tout en aspirant la solution de support de capture (90).

2. Mécanisme selon la revendication 1, dans lequel la tête d'aspiration (76) comprend un joint torique (76a) qui est disposé sur la surface d'extrémité de la tête d'aspiration (76) étant en contact avec la surface inférieure de la bague de fixation du filtre (82e).

3. Procédé pour empêcher la fuite de l'air d'aspiration lors de la filtration d'une solution de support de capture (90), le procédé utilisant une cartouche de support de capture (82) incluant un corps principal de cartouche (82c) et une bague de fixation de filtre (82e), un petit espace (GAP) étant formé entre la bague de fixation du filtre (82e) et le corps principal de cartouche (82e), du fait d'une tolérance d'ajustement dimensionnel ou d'un jeu, le corps principal de cartouche (82c) incluant une partie de stockage (82c1) pour stocker une solution de support de capture (90) et une partie de montage du filtre (82c3) dans laquelle un filtre pour filtrer la solution de support de capture est disposé, et la bague de fixation de filtre (82e) recouvrant la partie de montage du filtre (82c3), positionnant le filtre (82d), et aspirant et filtrant la solution de support de capture (90) à partir d'une surface inférieure correspondante, le procédé comportant les étapes consistant à :
fixer la partie de stockage (82c3) de la cartouche de support de capture (82), et
fournir une tête d'aspiration (76) pour aspirer la solution de support de capture (90) à travers la bague de fixation du filtre (82e) à l'aide d'un actionneur, et
aspirer la solution de support de capture (90) à travers le filtre (82d) alors que ledit actionneur applique une pression sur la bague de fixation du filtre (82d) contre la partie de montage du filtre (82c3) afin de supprimer l'espace (GAP).
